# EUROPEAN PATENT SPECIFICATION

(11) **EP 2 266 424 B1**
(45) Date of publication and mention of the grant of the patent: **15.02.2012**
(21) Application number: 09163682.9
(22) Date of filing: 24.06.2009
(51) Int. Cl.: A24B 13/00, B65B 1/32, B65B 9/04, B65B 37/18, G01G 19/00

(54) **A method and a system for the packing of tobacco pellets**
Verfahren und System zum Verpacken von Tabakkügelchen
Procédé et système pour le conditionnement de palettes de tabac

(43) Date of publication of application: 29.12.2010
(73) Proprietor: House of Oliver Twist A/S, 5230 Odense M (DK)
(72) Inventor: Knudsen, Jørgen Purup, 7800 Skive (DK)
(74) Representative: Nielsen, Henrik Sten

(56) References cited:
- WO-A-2004/095959
- DE-A1- 1 942 023
- US-A- 3 696 584
- US-A1- 2005 155 978

## Description

The present invention relates to a method and a system for the vacuum-packing of tobacco pellets. Further, the present invention relates to a method and a system for conveying, weighing and portioning of tobacco pellets, and an assembly and a method for conveying, weighing, portioning and vacuum-packing tobacco pellets.

Internationally, the term "smokeless tobacco" applies to a wide range of tobacco products the common feature of which is that they, as opposed to smoked tobacco products, are not intended to be consumed by being combusted and inhaled. The result is logically that no smoke is generated from consuming the product and therefore the smokeless tobacco is considered as being environmental friendly and often permitted in areas where smoking is prohibited by national regulation, e.g. in public transports, shops, restaurants, etc. Smokeless tobacco has a further positive environmental effect due to the fact that it often replaces traditionally smoked tobacco.

One of the most common forms of smokeless tobacco originating from Europe is spun twisted chewing tobacco. Spun twisted chewing tobacco is made of whole or half tobacco leaves that are twisted into a strand and cut into small pieces. Other forms are snuff, which is dried, pulverised tobacco snuffed into the nose. Moist snuff is granulated tobacco mixed with water and is also used in the mouth. Alternatively portion-packed snuff is used, which is similar to moist snuff but packed in small, porous bags - like tea bags - and is used in the mouth.

The applicant company has produced spun twisted tobacco leaves in the form of small, discreet mini-rolls of tobacco since 1805. The production of mini-rolls of tobacco is fundamentally based on old craftsmanship traditions, and small pieces of tobacco are still in some places twisted by hand as they were back in 1805. The mini-rolls of tobacco, commonly known as tobacco pellets, have a natural nicotine content that soothes or quells the urge to smoke. The mentioned pellets are e.g. about 1 cm long and have a radius of about 0.5 cm and are intended for being inserted between the cheek and the jaw. The pellet will release taste and nicotine for at least one hour, thus far fewer pellets will be used in a day as compared to smoking cigarettes. The pellet is not be swallowed after use, but is discarded like a chewing gum.

Although in the past tobacco pellets were twisted by hand, today automatic ways of producing pellets are used for allowing a higher and more cost-effective production One example of an automatic production plant for tobacco pellets have been described in the applicant's international patent application WO2008/138344, in which a set of rollers are used to produce a string from provided tobacco leaves, which is thereafter cut into pellets.

The tobacco pellets being manufactured by the above plant may be collected and provided in bulk. However, for allowing an effective sale and distribution to individual customers the pellets need to be packaged in suitable packages. Due to the increased production rates resulting from the automatic production technologies mentioned above there has been a need for automatic packaging technologies of tobacco pellets.

The tobacco pellets are typically delivered in a vacuum package resembling a small bag for accommodating a specific amount of pellets. The amount of pellets contained in each package corresponds to the consumption of an average user within a few days, i.e. 10-30 pellets. The package should be airtight and constitute a vacuum package for ensuring a shelf life of about one year from the production day in unopened state. An open package should be stored in a substantially airtight box for preventing the pellets from drying out too quickly. It is therefore an object of the present invention to provide technologies for the vacuum-packaging of tobacco pellets.

Since the tobacco pellets are made from whole natural tobacco leaves, the size of an individual pellet may vary to a certain degree also when being manufactured automatically. This is due to the natural variation in thickness and shape between different tobacco leaves. Packages containing a specific amount of pellets, i.e. a portion of pellets having a specific weight, may therefore contain a different number of pellets. It is therefore a further object of the present invention to provide technologies for ensuring substantially the same weight of each package of tobacco pellets.

The above need and objects together with numerous other needs and objects, which will be evident from the below detailed description of the present invention, are, in accordance with a first aspect of the present invention, obtained by a system for generating strips of vacuum-packed tobacco pellets, the pellets being provided in bulk, the system comprising an air conditioner for maintaining a temperature of no more than 15°C, preferably no more than 10°C. within the system, and a frame, the frame including a conveyor defining a conveying direction, and a number of processing stations along the conveying direction, the stations include:
a first station constituting a supply of a first foil of a first polymeric material, the first foil defining a longitudinal direction along the conveying direction and a transversal direction,
a second station constituting a deep drawing device for generating individual recesses in the first foil, the recesses being located side by side in the longitudinal and transversal directions,
a third station for weighing and portioning of a specific amount of pellets into each of the recesses of the first foil by combining a first and a second amount of pellets, the first amount being larger than the second amount,
a fourth station constituting a supply of a second foil of a second polymeric material, the second polymeric material being weldable with the first polymeric material, the second foil extending in the longitudinal and transversal directions and covering the recesses of the first foil,
a fifth station constituting a vacuum device and a welding device for applying vacuum within the recess and welding the first and the second foil together along welds circumferentially encircling each of the recesses, and
a sixth station constituting a cutting device for cutting the foils between the recesses in longitudinal direction for generating strips of vacuum-packed tobacco pellets.

The strips produced according to the first aspect may be further cut in a transversal direction for achieving individual packages or alternatively strips of a number of packages, which may in turn be put in a box and delivered to the customer.

The pellets are being provided in bulk, preferably shortly after being rolled and cut in to pellets. The pellets are slightly moist and should not be subjected to elevated temperatures. Elevated temperatures may cause the pellets to dry out quickly. A suitable cold climate, i.e. a temperature of no more than 15°C, preferably no more than 10°C, for the packaging of the pellets is achieved by the air conditioner. The air conditioner may constitute a cooling device for cooling the system. Preferably, the system is located in an air conditioned room maintaining a stable temperature of 15°C, preferably no more than 10°C.

The system according to the first aspect should be built on the stable production frame. The frame includes the conveyor being e.g. a conveying belt, chain, roller or similar mechanism for feeding the first and second foils through the system and the six stations working independently. The stations should be placed in a suitable order in relation to the conveying direction, i.e. beginning with the first station, then the second station etc.

The first station supplies the first foil from e.g. a roll and conveys the first foil towards the second station. The foil defines a longitudinal direction being the conveying direction and therefore effectively being endless, and a transversal direction being the width of the first foil. The second station performs a deep drawing of individual recesses in the first foil. The recesses are located side by side in both the longitudinal and the transversal direction The deep drawing device may be operating in a cold condition or alternatively the first foil is slightly heated, e.g. by IR lamps. The deep drawing machine may e.g. constitute a stamp acting with a force against the first foil, or alternatively a mould and a vacuum device creating the recess by suction.

The third station following the second station receives the bulk pellets, conveys, weighs and portions a specific amount of pellets into each recess in the first foil. The specific amount should be construed to mean that each recess should accommodate a portion of pellets having substantially the same mass, or weight The number of pellets of each portion may thus vary according to the natural variations in pellet size. For achieving an efficient weighing, the specific amount constitutes the sum of at least two smaller amounts being designated the first amount and the second amount. The first amount constitutes a large amount being provided at a higher rate for a higher flow velocity. The second amount constitutes a small amount being provided at a slower rate for a higher portioning accuracy.

The fourth station following the third station applies the second foil onto the first foil, thereby covering the recesses and the therein accommodated pellets. The second foil may preferably have the same size, i.e. width, as the first foil The first and second polymeric material of the first and second foils, respectively, should be weldable, i.e. at least the two opposing surfaces of the first and second foils should be able to be joined by welding. The two foils should additionally be at least substantially fluid-tight.

The fifth station constituting a vacuum device and a welding device preferably combined into one unit. The vacuum device may preferably be a small vacuum chamber for accommodating at least one recess and preferably the complete width of the foil. Vacuum is understood to mean any pressure being lower than ambient pressure (i.e 1 atm), such as 0.5 atm, 0.25 atm, 0.1 atm or 0.01 atm. The welding device should make a weld joining in the first and second foil in an airtight manner and the individual recesses should be completely encircled by the weld. The welding should be performed under vacuum conditions. After the welding the foil is conveyed towards the sixth station and when the recess is subjected to atmospheric pressure the foils, being flexible, collapses around the pellets forming a substantially rigid package.

The sixth station uses the cutting device, being a knife or a pair of scissors or the like, to sever the area between the recesses in longitudinal direction thereby generating the strips of vacuum packed pellets. In some embodiments a single broad weld is used for separating the recesses. In such cases the cutting device may sever the middle of the weld in the longitudinal direction. The weld should therefore have a certain width for allowing the recess to remain airtight. Alternatively, each recess has its own weld, i.e. two welds separate the recesses. The welds must not be damaged in such way as to compromise the tightness of the recess.

In a further embodiment according to the first aspect, the first foil constitutes a PE-foil and the second foil constitutes a laminated foil having three layers wherein the first layer is a PE layer, the second layer is an aluminium layer and the third layer is a polyester layer. The PE layer of the second foil may be welded to the PE foil constituting the first foil. PE (polyethylene) is a preferred material due to its low cost, high durability and simple disposal. The third layer of polyester may be used for printing product information such as logotypes etc.

In a further embodiment according to the first aspect, the deep drawing device comprises a heating device for heating the first foil, a mould for accommodating the first foil and a vacuum device for providing vacuum inside the mould. The first foil may be heated to a temperature of at least 50°C for the first foil to become flexible. The flexible first foil may thereafter be forced into a mould by air pressure and vacuum for achieving the recess in the first foil.

In a further embodiment according to the first aspect, the third station comprise the following elements:
a hopper for receiving the bulk tobacco pellets,
a weighing tray for weighing the specific amount of tobacco pellets,
a first channel for conveying the first amount of tobacco pellets from the hopper to the weighing tray, and
a second channel for conveying the second amount of tobacco pellets from the hopper to the weighing tray. The hopper may comprise a tray for receiving pellets directly from a pellet production plant or pellet storage. The pellets are received in bulk, i.e. in a bunch having no specific orientation or order in relation to each other.

The first channel is intended for conveying a relatively large amount of pellets into the weighing device, and therefore lacks the ability to convey a single pellet into the weighing device. Typically, the first channel conveys a plurality of pellets located side by side or overlapping, thus the conveying accuracy may be limited to 2-3 pellets, while the pellet flow is large. The second channel has a smaller pellet flow, but a higher conveying accuracy by substantially preventing pellets to be located side by side or overlapping, thereby allowing substantially one pellet to be conveyed at a time. Therefore, in a preferred embodiment 80-95% of the specific amount of pellets to be portioned into each recess is delivered from the first channel, after which the first channel is stopped. The second channel continues to deliver individual pellets until 100% of the specific amount is achieved. It is contemplated that since the pellets cannot be split, the weight of the specific amount may vary in the range of the weight of a single pellet.

The weighing tray receives the pellets from the channels and when the specific amount of pellets have been received in the weighing tray, the weighing tray delivers the specific amount to one recess of the first foil and resumes weighing of a new portion. It is contemplated that the channels may include conveying means, such as conveying belts, chains, rollers etc.

In a further embodiment according to the first aspect, the first and second channel each comprise an individual blocking device for selectively closing the first and/or the second channels. The channels may thus continuously feed pellets into the weighing tray. When the weighing tray includes an amount of pellets being close to the specific amount, the first channel may be closed by the blocking device. When the weighing tray includes the specific amount, the second channel is also closed by the blocking device and the pellets in the weighing tray are poured out into one (empty) recess of the first foil.

In a further embodiment according to the first aspect, the second channel has a width and a height substantially corresponding to the width and height of a single pellet. For efficiently delivering one pellet at a time from the second channel, the pellets may be arranged in a row. By having a second channel with a width and a height substantially corresponding to the width and height of a single pellet, any additional pellet occasionally being positioned on top of or beside another pellet will simply drop off, preferably into the first channel.

In a further embodiment according to the first aspect, the first channel and second channel have a downwardly angel towards the weighing tray and are mounted on a vibrating device. The above way of conveying is particular gentle to the pellets which may easily be damaged in case of rough handling.

In a further embodiment according to the first aspect, the third station comprises a combination weighing device, the combination weighing device including:
a hopper for receiving the bulk tobacco pellets, and
a plurality of weighing trays, such as 2-40 preferably 10-32, such as 10-15, 16-20 or 21-30, each for receiving and weighing a separate amount of pellets from the hopper, the first and second amount of pellets being selected from any of the plurality of weighing trays. The combination weighing device receives the bulk tobacco pellets in a hopper, which in turn distributes each pellet randomly into one of the weighing trays. When the combined amount of pellets in two of the weighing trays amount to the specific amount, the two weighing trays are closed off and distributed into an (empty) recess.

In a further embodiment according to the first aspect, the third station further comprises a portioning device for receiving the specific amount of pellets, the portioning device being movable in the transversal direction for portioning the specific amount into a specific recess along the transversal direction. The portioning device is preferably flexible for being able to deliver the specific amount of pellets received by the weighing device into a specific recess of the first foil. The pellets should be dropped into an empty recess of the first foil. To reach all of the recesses in the transversal direction, preferably the portioning device is movable in the transversal direction. When all of the recesses in the transversal direction have been filled with the specific amount of pellets, the foil is conveyed in the longitudinal direction for a new empty row of recesses to appear below the portioning device.

In a further embodiment according to the first aspect, the system further comprises a reject station for receiving the pellets from the portioning device in case the specific weight is not achieved. In case the portioning device accidentally receives an amount being different from the specific amount, i.e. beyond a stipulated measurement accuracy, the portion may be rejected since it may not fit into the package. This may occasionally be the case e.g. when an inappropriately large pellet is being distributed as the last pellet of the portion. In such cases the whole portion may be rejected and either returned to the bulk or disposed of into a waste container.

In a further embodiment according to the first aspect, the fifth station provides one broad weld between each of the recesses, or alternatively two thinner welds between each of the recesses. In some embodiments the longitudinal welds may be severed in the middle at the sixth station, i.e. one weld is shared by two recesses. In other embodiments the weld is encircling one recess only, and the severing is made between two such welds.

In a further embodiment according to the first aspect, further comprising a seventh station for at least partially severing the first and second foils in the transversal direction. The "infinite" strips resulting from the sixth station are not very convenient and the strips must therefore be severed along the transversal direction as well. In this way either single packages or smaller strips of e.g. 5 or 10 packages may be produced. Preferably, each package is at least partially severed along the transversal direction, i.e. by dashes, for easier separation by the customer.

The above need and objects together with numerous other needs and objects, which will be evident from the below detailed description of the present invention, are, in accordance with a second aspect of the present invention, obtained by a method for generating strips of vacuum-packed tobacco pellets, the pellets being provided in bulk, the method comprising the steps of:
supplying a first foil of a first polymeric material the first foil defining a longitudinal direction and a transversal direction,
deep drawing the first foil for generating individual recesses in the first foil, the recesses being located side by side in the longitudinal and transversal directions,
weighing and portioning of a specific amount of pellets into each of the recesses of the first foil by combining a first and a second amount of pellets, the first amount being larger than the second amount,
supplying a second foil of a second polymeric material, the second polymeric material being weldable with the first polymeric material, the second foil extending in the longitudinal and transversal directions and covering the recesses of the first foil,
applying vacuum within the recess and welding the first and the second foil together along welds circumferentially encircling each of the recesses, and
cutting the foils between the recesses in longitudinal direction for generating strips of vacuum-packed tobacco pellets,
the method being performed within an air-conditioned room maintaining a temperature of no more than 15°C, preferably no more than 10°C.

It is evident that the method according to the second aspect may be used together with the system according to the first aspect.

In a further embodiment according to the second aspect, the first amount is weighed before the second amount. It may be particular advantageous to provide the first amount through a broad conveying channel at a high flow intensity, and thereafter closing the broad channel and provide the second amount through a thin conveying channel at a low intensity.

It is evident that a further embodiment according to the second aspect may comprise any of the features of the first aspect.

### Brief description of the drawings

Figure 1 is a perspective view of an assembly for the weighing, portioning and vacuum-packing of tobacco pellets.
Figure 2 is detailed perspective view of the steps performed by the system for the vacuum-packing of tobacco pellets. Figure 3 is a perspective view of a deep drawing device.
Figure 4 is a cut-out view of the steps performed by the deep drawing device of fig 3.
Figure 5A and B are exploded perspective views of two systems for the conveying, weighing and portioning of tobacco pellets.
Figure 6 is a series of perspective views showing the steps of weighing and portioning tobacco pellets.
Figure 7 is a perspective view of a combined welding and vacuum device.
Figure 8 is a series describing the steps performed by the vacuum and welding device.

### Detailed description of the drawings

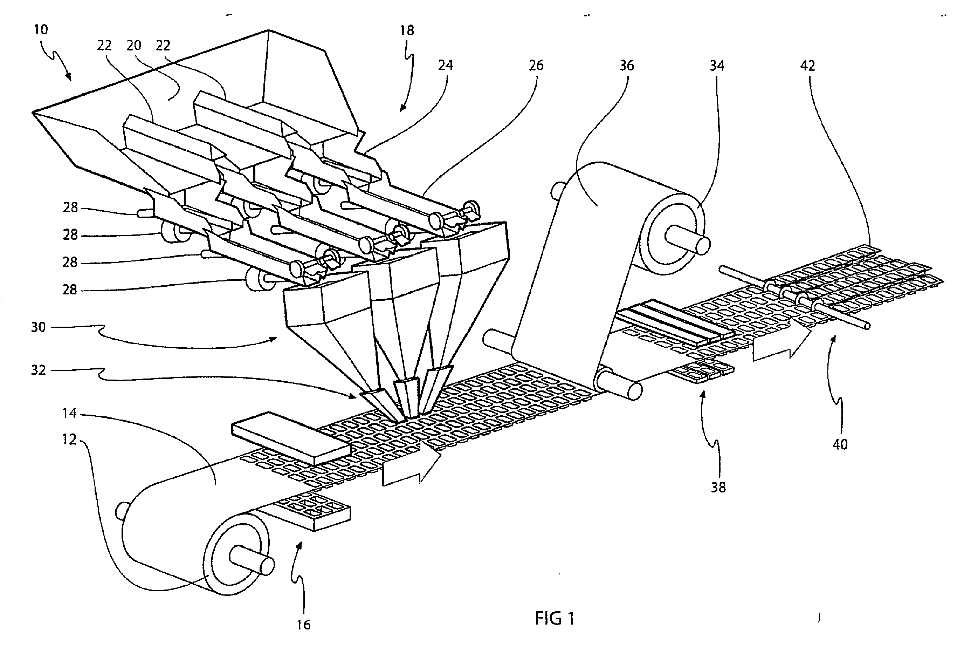

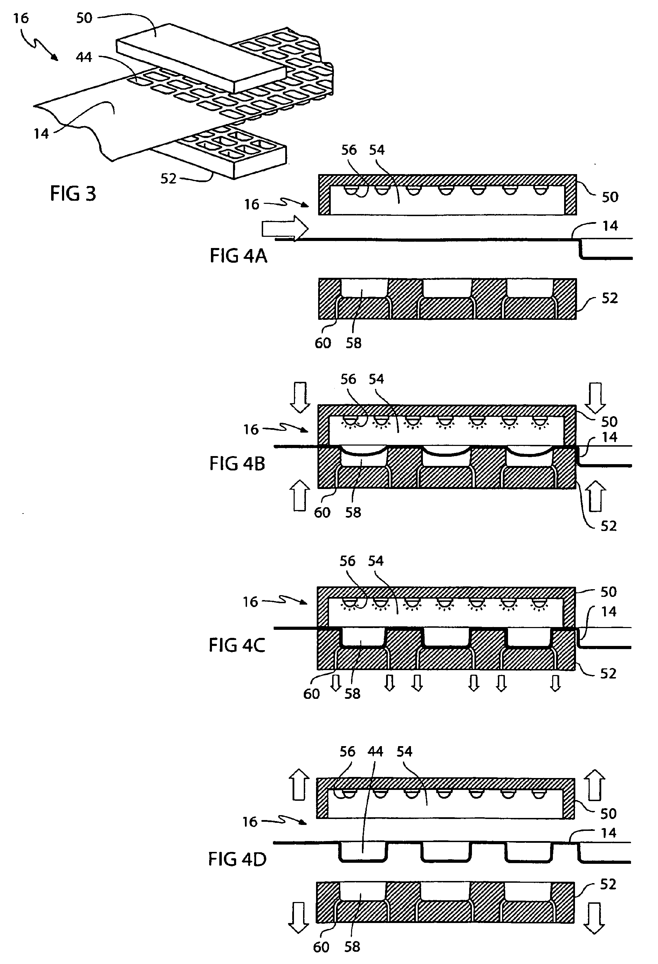

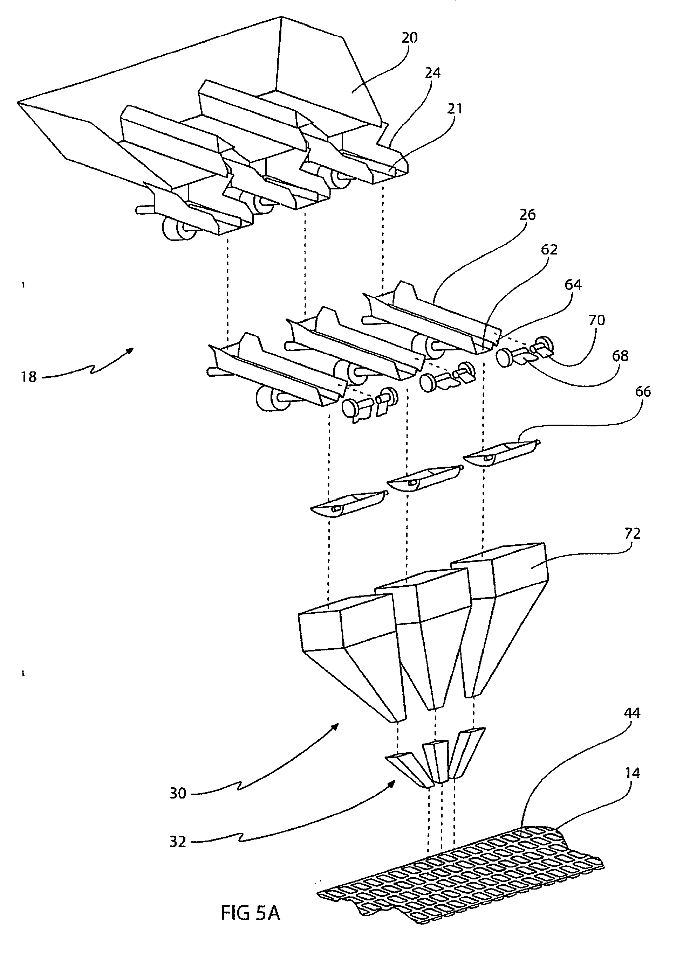

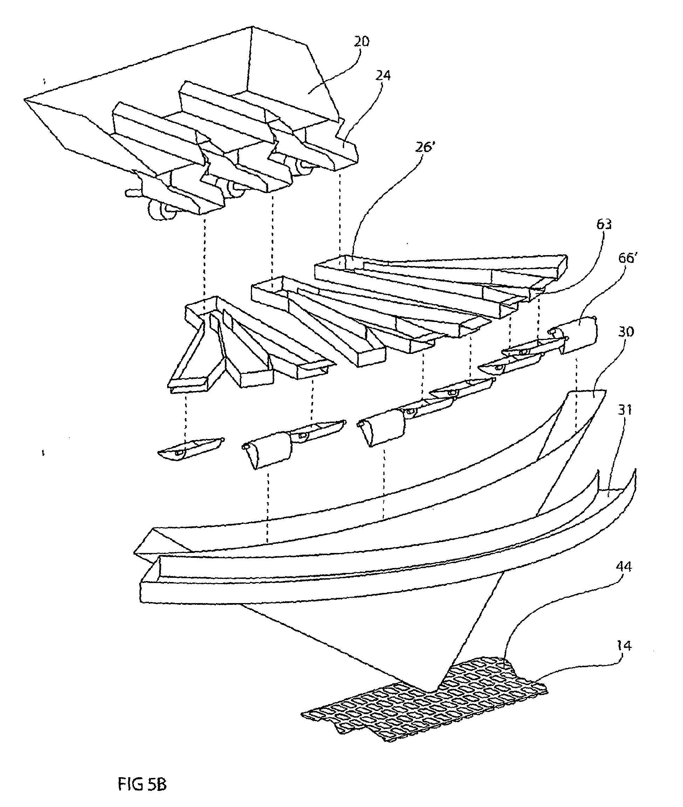

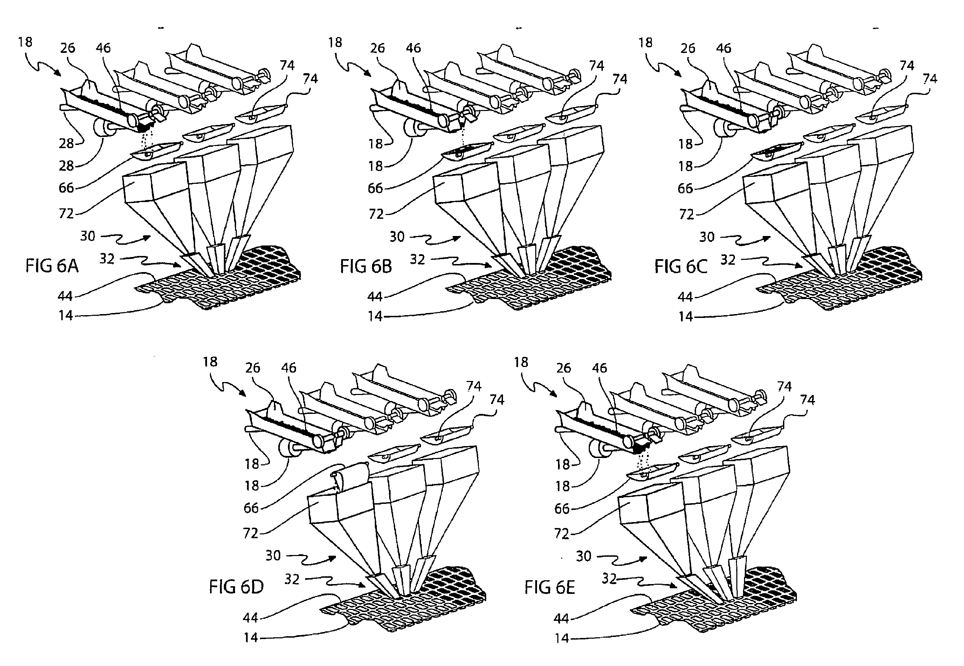

Figure 1 shows a perspective view of a vacuum packing system 10 for weighing, portioning and vacuum-packing of tobacco pellets. The system 10 comprises a conveyor and a number of stations. The first station is a first roll 12 comprising a first foil 14 constituting a plastic foil such as a PE foil. The first foil 14 is conveyed towards a second station constituting a deep drawing device 16. The deep drawing device 16 will be further described in connection with figure 3 and figure 4. The first foil 14 is further conveyed towards a third station comprising a weighing and portioning system 18. The tobacco pellets are provided in bulk in a loading hopper 20. The loading hopper 20 is divided into three separate divisions by two dividers 22. The dividers 22 guide the pellets into three parallel channels, constituting three parallel lines, each being divided into an upper channel 24 and a subsequent lower channel 26. The loading hopper 20 and the weighing and portioning system 18 are mounted on a vibration frame 28 which causes the loading hopper 20 and the channels 22 to oscillate. The loading hopper 20 and the channels 22 are further mounted having a downward slope which together with the oscillations allows the tobacco pellets to gently flow from the loading hopper 20 towards the upper channel 24 and further towards the lower channel 26. The upper and lower channels 24, 26 constitute conveying channels. The lower channel 26 interconnects the loading hopper 20 with a weighing device 30. The weighing device 30 is in turn connected to a portioning device 32. The channels 24, 26, the weighing device 30 and the portioning device 32 will be further described in relation to figure 5 and figure 6.

The vacuum-packing system 10 further comprises a fourth station constituting a second roll 34 of a second plastic foil 36. The second plastic foil 36 is applied on top of the first foil 14 after passing the portioning device 32. The first and second foils 14, 36 are then conveyed towards a vacuum and welding device 38, constituting a fifth station, for sealing the first and second foils together under vacuum condition.

Following the fifth station is a sixth station constituting a cutting device 40 for cutting the foils 14, 36 into individual strips 42.

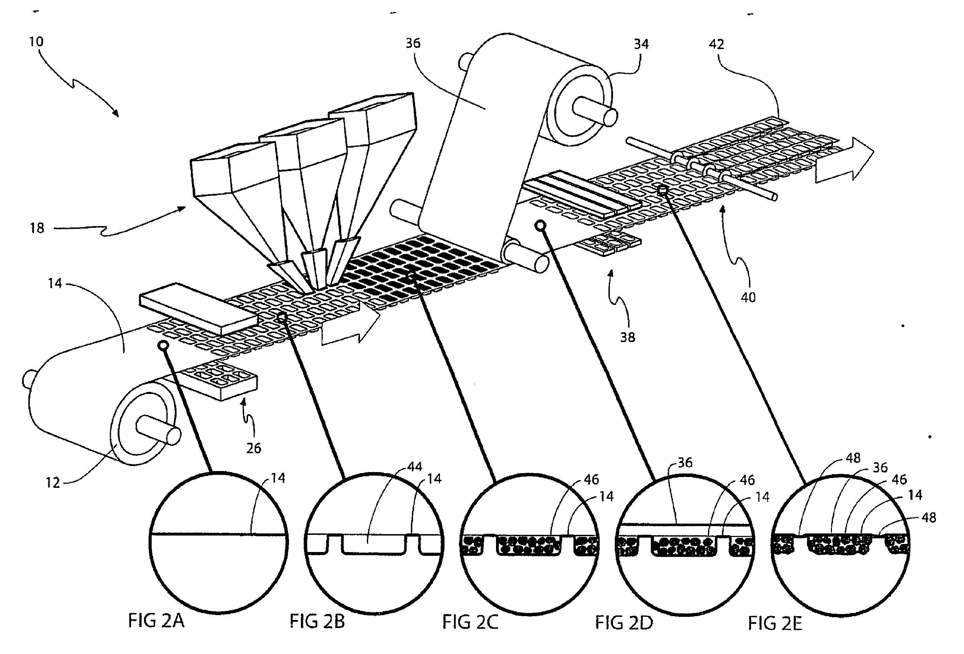

Figure 2 shows a detailed view of the first foil when being conveyed along the vacuum-packing system 10 of figure 1.

Figure 2A shows a closer view of the first foil 14 as provided by the first station constituting the first roll 12. It can be noticed that the first foil 14 is completely flat and extending in a longitudinal direction and transversal direction. In the present context, the transversal direction defines the width of the first foil 14 and the longitudinal direction constitutes the conveying direction of the first foil 14.

Figure 2B shows the first foil 14 after passing the second station constituting the deep drawing device 16. It can be noticed that the first foil 14 has been provided with a plurality of recesses 44 extending in the longitudinal and transversal directions. In the present embodiment five recesses 44 are provided in the transversal direction.

Figure 2C shows the first foil 14 after passing the third station constituting the weighing and portioning system 18. At the third station each recess 44 is filled with a specific amount of tobacco pellets. The specific amount should be construed to mean a specific weight or mass of pellets, i.e. all recesses 44 should be filled by the same mass of pellets. It is understood that the specific weight in the present embodiment may vary at least within an accuracy range defined by the weight of a single pellet. The pellets are designated the reference numeral 46.

Figure 2D shows the first foil 14 after passing the fourth station constituting the second roll 34 of supplying the second foil 36. The second foil 36 covers the first foil 14 including the recesses 44 and the pellets 46. At the present stage the first and second foils 14, 36 have not been joined together but are merely juxtaposed.

Figure 2E shows the first and second foils 14, 36 after passing the fifth station constituting the vacuum and welding device 38. The first and second foils 14, 36 have now been welded together. The welds 48 encircle the recesses 44. The recess 44 is now assuming a contracted state due to the vacuum condition present inside the recess 44.

Figure 3 shows a perspective view of the deep drawing device 16. It can be noticed that the deep drawing device 16 is able to perform three recesses 44 in the longitudinal direction and five recesses 44 in the transversal direction simultaneously

Figure 4 shows a series describing the steps of deep drawing a first foil 14.

Figure 4A shows the first foil 14 being introduced into the deep drawing device 16 according to the direction of the arrow. The deep drawing device 16 comprises an upper part 50 and a lower part 52. The upper part 50 defines an inner cavity 54 being provided with IR heat lamps 56. The lower part 52 comprises moulds 58 being connected to vacuum conduits 60.

Figure 4B shows the deep drawing device 16 when the upper part 50 has been closed onto the lower part 52. By activating the heat lamps 56 the first foil 14 may increase its temperature to about 50°C thereby allowing the first foil 14 to become more flexible and less brittle compared to its normal cold state.

Figure 4C shows the deep drawing device 16 when vacuum has been applied to the moulds 58 via the vacuum conduits 60. The ambient pressure outside the mould 58 together with the low pressure in the moulds 58 acts on the first foil 14 and forces the first foil 14 into the mould 58. Due to the flexibility of the first foil 14 it will substantially align to the mould 58 and assume the inner shape of the mould 58.

Figure 4D shows the deep drawing device 16 when the upper and lower parts 50, 52 have been separated. The first foil 14 now has recesses 44 and may be conveyed towards the third station.

Figure 5A shows an exploded view of the third station constituting the weighing and portioning system 18, comprising three parallel lines. The lower channel 26 on the weighing and portioning system 18 comprises a broad channel 62 and a thin channel 64 leading from the upper channel 24 towards the weighing device 30. The broad channel 62 may accommodate a large amount of pellets located on top of and beside each other. The thin channel 64 which is located in an elevated and sidewardly position in relation to the broad channel 62 has a width and a height for accommodating substantially only one pellet, while the length allows several pellets to be positioned one after the other. The upper channel 24 comprises a guiding flange for guiding the pellets towards the thin channel 64. In this way it is assured that the thin channel 64 comprises a substantially unbroken line of pellets for being able to continuously feed pellets. Additional pellets will just fall off into the broad channel 62. A weighing tray 66 is located at the end of the lower channel, i e. at the end of the broad and thin channels 62, 64. The weighing tray 66 is pivotally mounted and may assume a horizontal position in which pellets may be received and weighed, and a vertical position in which the received pellets are released into a funnel 72 of the weighing device 30. The funnel leads to a portioning device 32 located above a specific recess 44 of the first foil 14. The flow of pellets from the broad channel 62 and the thin channel 64 into the weighing tray 66 is controlled by a broad brush 68 and a thin brush 70, respectively. The broad and thin brushes 68, 70 are pivotally mounted and may individually assume either a closed state or an open state.

Figure 5B shows an exploded view of a further embodiment of the third station constituting the weighing and portioning system 18'. One drawback with the previous embodiment is that although a uniform distribution rate into the three weighing trays is aspired, in reality the distribution rate into the weighing trays will be more or less occasional, resulting in waiting time between the closing of the channels and the reopening when the portioning device 32 has been moved to a new location. To accelerate the weighing and portioning a new embodiment has been proposed, where each of the three parallel lower channels 26' are split up into three path ending with a separate gate 63, thus a total of nine gates 63. Below each gate 63 a weighing tray 66' is located. Initially, all gates 63 are open and each weighing tray 66' will receive pellets from its corresponding lower channel 26. When the sum of any two or three weighing trays 66' equals the specific amount, the relevant channels 26' are closed off by closing the corresponding gates 63. The trays 66' are subsequently emptied into the common funnel 72 leading to a specific recess 44 in the first foil 14, whereupon the funnel 72 shifts position to a new empty recess 44, and the closed gates 63 open. Since the other weighing trays 66' are still receiving pellets a higher speed is achieved compared to the first embodiment. Also, a higher accuracy may be achieved due to the combination of any two or three of nine possible weighing trays 66'. In case any single weighing tray 66' exceeds the specific amount, the pellets accommodated in the weighing tray 66' are ejected into a reject tray 31 and may be disposed of or alternatively returned to the bulk.

Figure 6 shows a series describing the steps of weighing and portioning of the tobacco pellets using the first embodiment as shown in fig 5A.

Figure 6A shows the first step of the weighing of the pellets. The pellets 46 are conveyed through the lower channel 26 of the weighing and portioning system by means of the vibration frame 28. Since both the broad and thin brushes 68, 70 are positioned in the open state a large flow of intensity of pellets 46 into the weighing tray 66 is achieved. In this way, the weighing tray 66 may be filled quickly to an amount slightly less than the specific amount intended to correspond to one portion of the pellets.

Figure 6B shows the second step of the weighing of the pellets. In the present step the weighing tray 66 is almost accommodating a specific amount of pellets 46 and therefore the broad brush 68 is shifted into a closed position thereby blocking the flow of pellets 46 from the broad channel 62 into the weighing tray 66. In this way pellets 46 are feed into the weighing tray only from the thin channel 64 and substantially one by one.

Figure 6C shows the third step of the weighing of the pellets when the weighing tray 66 accommodates the specific amount of pellets 46. In the present step the thin brush 70 is also shifted into the closed position thereby completely blocking the flow of pellets from the lower channel 26 into the weighing tray 66. The weighing tray 66 is connected to a funnel 72 via hinges 74.

Figure 6D shows the fourth and final step of tthehe weighing of the pellets. When the specific amount of pellets 46 have been weighed into the weighing tray 66 and the broad and thin channels 62, 64 have been closed off by the broad and thin brushes 68, 70, the weighing tray 66 is pivoted from the horizontal position into the vertical position and thereby the specific amount of pellets 46 are emptied into the funnel 72. The funnel 72 end directly above a specific recess 44 of the first foil 14. The funnel 72 ends at a portioning device 32, which is located above a specific recess 44 of the first foil 14 The funnel 72 and/or portioning device 32 are pivotable and movable in the transversal direction so that the same portioning device 32 may deliver pellets 46 to all of the five recesses in the transversal direction of the first foil 14.

Figure 6E shows once more the first step of the weighing of the pellets as shown in fig 6A. When the fourth step is completed, the first step is resumed by first pivoting the weighing tray 66 back to a substantially horizontal orientation and subsequently opening both the broad brush 68 and the thin brush 70.

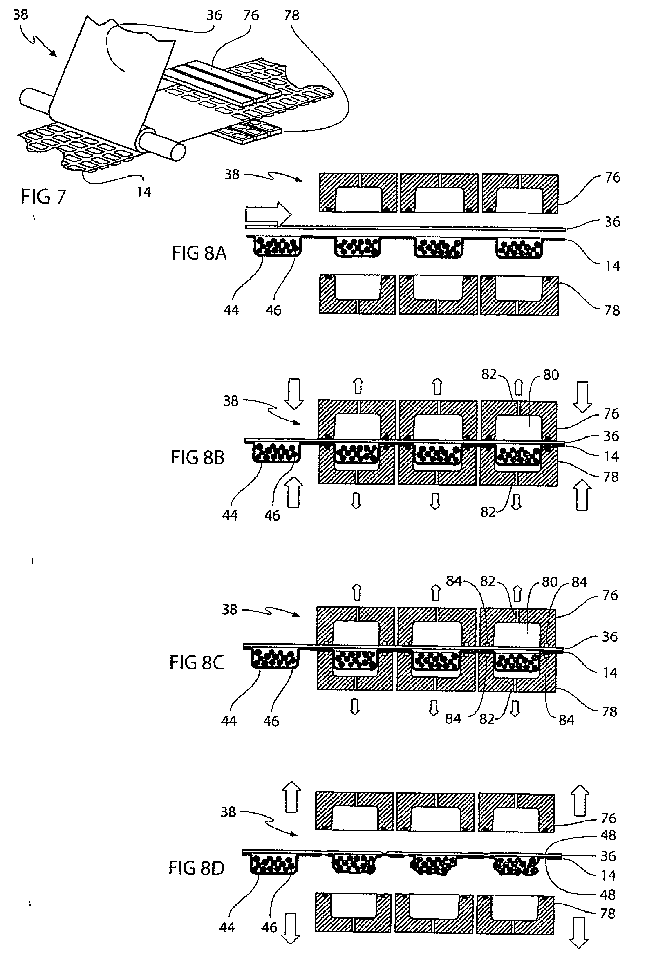

Figure 7 shows the fifth station constituting the vacuum and welding device 38. It can be seen that the vacuum and welding device 38 simultaneously may evacuate and weld three recesses 44 in the longitudinal direction and five recesses 44 in the transversal direction. It can further be seen that the second foil 36 is substantially the same width as the first foil 14.

Figure 8 shows a series describing the steps of evacuating the recesses 44 and welding the first and second foils 14, 36 together.

Figure 8A shows the first and second foils 14, 36 entering a vacuum and welding device 38. The vacuum and welding device 38 comprises an upper part 76 and a lower part 78. The first and the second foils 14, 36 are introduced between the upper and lower parts 76, 78. The second foil 36 and the first foil 14 are juxtaposed so that the second foil covers the recesses 44 and the pellets 46 located therein.

Figure 8B shows the vacuum and welding device 38 when the upper part 76 and the lower part 78 are juxtaposed. In the present step air is being evacuated from the vacuum chamber 80 via the vacuum conduit 82. The air is being evacuated inside as well as outside of the recess.

Figure 8C shows the vacuum and welding device 38 when the vacuum chamber 80 has been evacuated and welding is initiated. The welding is performed by heating of electrical lines 84 constituting welding lines, which circumferentially encircle the recess 44 on top of as well as below the foils 14, 36. The electrical lines 84 provide a sufficient temperature for melting the first and second foil 14, 36 and joining them together by a weld. The temperature and time needed for the welding is dependent on the thickness of the first and second foils 14, 36; in case thick foils are used, longer time or higher temperatures are required for achieving a sufficient strength of the weld. Care should however be taken not to overheat the weld since an overheated weld may separate recesses from each other and cause a damaged or leaking weld.

Figure 8D shows the vacuum and welding device 38 when the upper part 76 and the lower part 78 are separated allowing air pressure to act on the first and second foils compressing them forming compact packages.

Although the present invention has been described above with reference to specific embodiments, it is of course to be contemplated that numerous modifications may be deduced by a person having ordinary skill in the art, and modifications readily perceivable by a person having ordinary skill in the art is consequently to be construed part of the present invention as defined in the appending claims.

### List of parts with reference to the figures

| | |
|---|---|
| 10. Vacuum packing system | 48 Welds |
| 12. First roll | 50. Upper part (deep drawing device) |
| 14. First foil | 52 Lower part (deep drawing device) |
| 16. Deep drawing device | 54. Inner cavity |
| 18. Weighing and portioning system | 56. IR heat lamp |
| 20. Loading hopper | 58. Moulds |
| 21. Guiding flange | 60. Vacuum conduits (deep drawing dev.) |
| 22. Dividers | 62. Broad channel |
| 24. Upper channel | 63. Gate |
| 26. Lower channel | 64. Thin channel |
| 28. Vibration frame | 66. Weighing tray |
| 30. Weighing device | 68. broad brush |
| 31. Reject | 70. Thin brush |
| 32. Portioning device | 72. Funnel |
| 34. Second roll | 74. Hinge |
| 36. Second foil | 76. Upper part (Vacuum device) |
| 38. Vacuum and welding device | 78. Lower part (Vacuum device) |
| 40. Cutting device | 80. Vacuum chamber |
| 42. Strips | 82. Vacuum conduits (Vacuum device) |
| 44. Recess | 84. Electrical line |
| 46. Pellets | |

## Claims

1. A system for generating strips of vacuum-packed tobacco pellets, said pellets being provided in bulk, said system comprising an air conditioner for maintaining a temperature of no more than 15°C, preferably no more than 10°C, within said system, and a frame, said frame including a conveyor defining a conveying direction, and a number of processing stations along said conveying direction, said stations include:
a first station constituting a supply of a first foil of a first polymeric material, said first foil defining a longitudinal direction along said conveying direction and a transversal direction,
a second station constituting a deep drawing device for generating individual recesses in said first foil, said recesses being located side by side in said longitudinal and transversal directions,
a third station for weighing and portioning of a specific amount of pellets into each of said recesses of said first foil by combining a first and a second amount of pellets, said first amount being larger than said second amount,
a fourth station constituting a supply of a second foil of a second polymeric material, said second polymeric material being weldable with said first polymeric material, said second foil extending in said longitudinal and transversal directions and covering said recesses of said first foil,
a fifth station constituting a vacuum device and a welding device for applying vacuum within said recess and welding said first and said second foil together along welds circumferentially encircling each of said recesses, and
a sixth station constituting a cutting device for cutting said foils between said recesses in longitudinal direction for generating strips of vacuum-packed tobacco pellets.

2. The system according to claim 1 wherein said first foil constitutes a PE foil and said second foil constitutes a laminated foil having three layers wherein the first layer is a PE layer, the second layer is an aluminium layer and the third layer is a polyester layer.

3. The system according to any of the preceding claims, wherein said deep drawing device comprises a heating device for heating said first foil, a mould for accommodating said first foil and a vacuum device for providing vacuum inside said mould.

4. The system according to any of the preceding claims, wherein said third station comprises the following elements:
a hopper for receiving said bulk tobacco pellets,
a weighing tray for weighing said specific amount of tobacco pellets,
a first channel for conveying said first amount of tobacco pellets from said hopper to said weighing tray, and
a second channel for conveying said second amount of tobacco pellets from said hopper to said weighing tray.

5. The system according to claims 4, wherein said first and second channel each comprise an individual blocking device for selectively closing said first and/or said second channels.

6. The system according to any of the claims 4 or 5, wherein said second channel has a width and a height substantially corresponding to the width and height of a single pellet.

7. The system according to any of the claims 4 - 6, wherein said hopper, first channel and second channel have a downwardly angel towards said weighing tray and are mounted on a vibrating device.

8. The system according to any of the claims 1-3, wherein said third station comprise a combination weighing device, said combination weighing device including:
a hopper for receiving said bulk tobacco pellets, and
a plurality of weighing trays, such as 2-40 preferably 10-32, such as 10-15, 16-20 or 21-30, each for receiving and weighing a separate amount of pellets from said hopper, said first and second amount of pellets being selected from any of said plurality of weighing trays.

9. The system according to any of the preceding claims, wherein said third station further comprises a portioning device for receiving said specific amount of pellets, said portioning device being movable in said transversal direction for portioning said specific amount into a specific recess along said transversal direction.

10. The system according to claim 8, wherein said system further comprise a reject station for receiving said pellets from said portioning device in case said specific weight is not achieved.

11. The system according to any of the preceding claims, wherein said fifth station provides one broad weld between each of said recesses, or alternatively two thinner welds between each of said recesses.

12. The system according to any of the preceding claims, further comprising a seventh station for at least partially severing said first and second foils in said transversal direction.

13. A method for generating strips of vacuum-packed tobacco pellets, said pellets being provided in bulk, said method comprising the steps of:
supplying a first foil of a first polymeric material said first foil defining a longitudinal direction and a transversal direction,
deep drawing said first foil for generating individual recesses in said first foil, said recesses being located side by side in said longitudinal and transversal directions,
weighing and portioning of a specific amount of pellets into each of said recesses of said first foil by combining a first and a second amount of pellets, said first amount being larger than said second amount,
supplying a second foil of a second polymeric material, said second polymeric material being weldable with said first polymeric material, said second foil extending in said longitudinal and transversal directions and covering said recesses of said first foil,
applying vacuum within said recess and welding said first and said second foil together along welds circumferentially encircling each of said recesses, and
cutting said foils between said recesses in longitudinal direction for generating strips of vacuum-packed tobacco pellets,
said method being performed within an air-conditioned room maintaining a temperature of no more than 15°C, preferably no more than 10°C.

14. The method according to any of the preceding claims, wherein said first amount is weighed before said second amount.

15. The method according to any of the claims 13 or 14, further comprising any of the features of claims 1-12.

## Patentansprüche

1. System zur Erzeugung von Bändern mit vakuumverpackten Tabakkügelchen, in welchem die Kügelchen als Bulkware zur Verfugung gestellt werden, welches System eine Luftkühlanlage zur Aufrechterhaltung einer Temperatur von nicht über 15°C, vorzugsweise nicht über 10°C, innerhalb dieses Systems umfasst, sowie einen Rahmen, welcher ein Transportband mit einer definierten Transportrichtung und eine Anzahl von Verarbeitungsabschnitten in Transportbandrichtung umfasst, welche Abschnitte folgendes enthalten:
einen ersten Abschnitt, wo eine erste Folie aus einem ersten Polymerwerkstoff zugeführt wird, und die erste Folie sich in Längs- und Querrichtung entlang der Transportrichtung erstreckt,
einen zweiten Abschnitt mit einer Tiefziehvorrichtung zur Erzeugung von individuellen Vertiefungen in der ersten Folie, und wo die Vertiefungen Seite an Seite in der Längs- und Querrichtung angeordnet sind,
einen dritten Abschnitt zum Abbiegen und Verteilen einer bestimmten Menge Kügelchen in jede der Vertiefungen in der ersten Folie durch Kombinieren einer ersten und zweiten Menge Kügelchen, und wo die erste Menge grösser als die zweite Menge ist,
einen vielen Abschnitt, wo eine zweite Folie aus einem zweiten Polymerwerkstoff zugeführt wird, welcher zweiten Polymerwerkstoff mit dem ersten Polymerwerkstoff verschweissbar ist, und wo sich die zweite Folie in der Längs- und Querrichtung erstreckt und die Vertiefungen in der ersten Folie überdeckt,
einen fünften Abschnitt mit einer Vakuumvorrichtung und einer Schweissvorrichtung zum Anlegen eines Vakuums in der Vertiefung und Zusammenschweissen der ersten und zweiten Folie entlang von Schweissnähten, welche den Umkreis der jeweiligen Vertiefung umranden, und
einen sechsten Abschnitt mit einer Schneidvorrichtung zum Aufschneiden der Folien in Längsrichtung zwischen den Vertiefungen zur Erzeugung von Bändern mit vakuumverpackten Tabakkügelchen.

2. System gemäss Anspruch 1, in welchem die erste Folie eine PE-Folie ist und die zweite Folie eine laminierte Folie mit drei Schichten ist, wo die erste Schicht eine PE-Schicht, die zweite Schicht eine Aluminiumschicht und die dritte Schicht eine Polyesterschicht ist.

3. System gemäss einem jeglichen der vorhergehenden Ansprüche, in welchem die Tiefziehvorrichtung eine Heizvorrichtung zum Erwärmen der ersten Folie umfasst, eine Form zum Aufnehmen der ersten Folie und eine Vakuumvorrichtung zum Anlegen eines Vakuums in der Form.

4. System gemäss einem jeglichen der vorhergehenden Ansprüche, in welchem der dritte Abschnitt folgende Elemente umfasst:
einen Schüttgutbehälter zum Aufnehmen der Tabakkügelchen-Bulkware,
eine Waagschale zum Abwiegen der bestimmten Menge von Tabakkügelchen,
einen ersten Kanal zum Transport der ersten Menge von Tabakkügelchen aus dem Schüttgutbehälter zur Waagschale, und
einen zweiten Kanal zum Transport der zweiten Menge von Tabakkügelchen aus dem Schüttgutbehälter zur Waagschale.

5. System gemäss Anspruch 4, in welchem der erste und zweite Kanal jeweils eine individuelle Blockierungsvorrichtung zum selektiven Schliessen des ersten und/oder zweiten Kanals umfasst.

6. System gemäss einem jeglichen der Ansprüche 4 oder 5, in welchem der zweite Kanal eine Breite und Höhe aufweist, die im Wesentlichen der Breite und Höhe eines einzelnen Kügelchens entspricht.

7. System gemäss einem jeglichen der Ansprüche 4-6, in welchem der Schüttgutbehälter, der erste Kanal und der zweite Kanal in Richtung der Waagschale abwärts geneigt und auf einer Rüttelvorrichtung montiert sind.

8. System gemäss einem jeglichen der Ansprüche 1-3, in welchem der dritte Abschnitt eine Kombinationswiegevorrichtung umfasst, welche folgendes enthält:
einen Schüttgutbehälter zum Aufnehmen der Tabakkügelchen-Bulkware, und
eine Vielzahl von Waagschalen, wie etwa 2-40, vorzugsweise 10-32, wie etwa 10-15, 16-20 oder 21-30, jeweils zum Aufnehmen und Abwiegen einer separaten Menge Kügelchen aus dem Schüttgutbehälter, und wo die und zweiten Menge von Kügelchen von einer jeglichen der Vielzahl von Waagschalen ausgewählt wird.

9. System gemäss einem jeglichen der vorhergehenden Ansprüche, in welchem der dritte Abschnitt ferner eine Verteilungsvorrichtung zum Aufnehmen der bestimmten Menge von Kügelchen umfasst, und wo die Verteilungsvorrichtung in Querrichtung verschoben werden kann, um die bestimmte Menge in eine bestimmte Vertiefung entlang der Querrichtung zu verteilen.

10. System gemäss Anspruch 8, in welchem das System ferner einen Ausschussabschnitt umfasst zum Aufnehmen der Kügelchen aus der Verteilungsvorrichtung, sofern das bestimmte Gewicht nicht erreicht wird.

11. System gemäss einem jeglichen der vorhergehenden Ansprüche, in welchem der fünfte Abschnitt eine einzelne breite Schweissnaht zwischen den jeweiligen Vertiefungen erstellt, oder alternativ zwei schmälere Schweißnähte zwischen den jeweiligen Vertiefungen.

12. System gemäss einem jeglichen der vorhergehenden Ansprüche, welches ferner einen siebenten Abschnitt umfasst, um die erste und zweite Folie zumindest teilweise in Querrichtung abzutrennen.

13. Verfahren zur Erzeugung von Bändern mit vakuumverpackten Tabakkügelchen, bei welchem die Kügelchen als Bulkware zur Verfugung gestellt werden, welches Verfahren folgende Schritte umfasst:
Zuführen einer ersten Folie aus einem ersten Polymerwerkstoff, welche erste Folie in Länge- und Querrichtung verläuft,
Tiefziehen der ersten Folie zur Erzeugung von individuellen Vertiefungen in der ersten Folie, welche Vertiefungen Seite an Seite in der Längs- und Querrichtung angeordnet sind,
Abwiegen und Verteilern einer bestimmten Menge Kügelchen in jede der Vertiefungen in der ersten Folie durch Kombinieren einer ersten und zweiten Menge Kügelchen, und wo die erste Menge grösser als die zweite Menge ist,
Zuführen einer zweiten Folie aus einem zweiten Polymerwerkstoff, welcher zweite Polymerwerkstoff mit dem ersten Polymerwerkstoff verschweissbar ist, und wo sich die zweite Folie in der Längs- und Querrichtung erstreckt und die Vertiefungen in der ersten Folie überdeckt,
Anlegen eines Vakuums in der Vertiefung und Zusammenschweissen der ersten und zweiten Folie entlang von Schweissnähten, welche den Umkreis der jeweiligen Vertiefung umranden, und
Aufschneiden der Folien in Längsrichtung zwischen den Vertiefungen zur Erzeugung von Bändern mit vakuumverpackten Tabakkügelchen,
welches Verfahren in einem luftgekühlten Raum durchgeführt wird, in welchem die Temperatur unter 15°C, vorzugsweise unter 10°C, gehalten wird.

14. Verfahren gemäss einem jeglichen der vorhergehenden Ansprüche, bei welchem die erste Menge vor der zweiten Menge abgewogen wird.

15. Verfahren gemäss einem jeglichen der Ansprüche 13 oder 14, welches ferner ein jegliches der charakteristischen Merkmale der Ansprüche 1-12 umfasst.

## Revendications

1. Système de génération de bandes de palettes de tabac conditionnées sous vide, lesdites palettes étant fournies en vrac, ledit système comprenant un conditionneur d'air pour maintenir une température n'excédant pas 15°C, de préférence n'excédant pas 10°C, à l'intérieur dudit système, et un cadre, ledit cadre incluant un transporteur définissant une direction de transport, et un nombre de stations d'usinage le long de ladite direction de transport, lesdites stations incluant:
une première station constituant une alimentation d'une première feuille d'une première matière polymérique, ladite première feuille définissant une direction longitudinale le long de ladite direction de transport et une direction transversale,
une deuxième station constituant un dispositif d'étirage profond pour la génération de rainures individuelles dans ladite première feuille, lesdites rainures étant localisées l'une à côté de l'autre dans lesdites directions longitudinales et transversales,
une troisième station pour peser et distribuer une quantité spécifique de palettes dans chacun desdites rainures de ladite première feuille en combinant une première et une deuxième quantité de palettes, ladite première quantité étant plus large que ladite deuxième quantité,
une quatrième station constituant une alimentation d'une deuxième feuille d'une deuxième matière polymérique, ladite deuxième matière polymérique étant soudable avec ladite première matière polymérique, ladite deuxième feuille s'étendant dans lesdites directions longitudinale et transversale et couvrant lesdites rainures de ladite première feuille,
une cinquième station constituant un dispositif sous vide et un dispositif de soudure pour appliquer du vide dans lesdites rainures et soudant ladite première feuille et ladite deuxième feuille ensemble le long des soudures encerclant chacune desdites rainures de manière circonférentielle, et
une sixième station constituant un dispositif de coupe pour couper lesdites feuilles entre lesdites rainures dans la direction longitudinale pour générer des bandes de palettes de tabac conditionnées sous vide.

2. Système selon la revendication 1 dans lequel ladite première feuille constitue une feuille en PE et ladite deuxième feuille constitue une feuille laminée ayant trois couches dans lesquelles ladite première couche est une couche en PE, la deuxième couche est une couche en aluminium et la troisième couche est une couche en polyester.

3. Système selon l'une quelconque des revendications précédentes, dans lequel ledit dispositif d'étirage profond comprend un dispositif de chauffage pour chauffeur ladite première feuille, une moule pour contenir ladite première feuille et un dispositif sous vide pour fournir du vide à l'intérieur de ladite moule.

4. Système selon l'une quelconque des revendications précédentes, dans lequel ladite troisième station comprend les éléments suivants:
une trémie pour recevoir lesdites palettes de tabac en vrac,
une tablette de pesage pour peser ladite quantité spécifique de palettes de tabac,
un premier canal pour transporter ladite première quantité de palettes de tabac de ladite trémie à ladite tablette de pesage, et
un deuxième canal pour transporter ladite deuxième quantité de palettes de tabac de ladite trémie à ladite tablette de pesage.

5. Système selon la revendication 4, dans lequel lesdits premier et deuxième canaux comprennent chacun un dispositif de calage individuel pour fermer de manière sélective ledit premier et/ou ledit deuxième canal.

6. Système selon l'une quelconque des revendications 4 ou 5, dans lequel ledit deuxième canal a une largeur et une hauteur correspondant essentiellement à la largeur et à la hauteur d'une seule palette.

7. Système selon l'une quelconque des revendications 4 à 6, dans lequel ladite trémie, le premier canal et le deuxième canal ont un angle descendant vers ladite tablette de pesage et sont montés sur un dispositif vibrant.

8. Système selon l'une quelconque des revendications 1 à 3, dans lequel ladite troisième station comprend une dispositif de pesage de combinaison, ledit dispositif de pesage de combinaison incluant:
une trémie pour recevoir lesdites palettes de tabac en vrac, et
une pluralité de tablettes de pesage, telle que 2 à 40, de préférence 10 à 32, telle que 10 à 15, 16 à 20 ou 21 à 30, chacune pour recevoir et peser une quantité séparée de palettes de ladite trémie, ladite première et ladite deuxième quantité de palettes étant sélectionnés à partir de l'une quelconque de ladite pluralité de tablettes de pesage.

9. Système selon l'une quelconque des revendications précédentes, dans lequel ladite troisième station comprend en outre un dispositif de distribution pour recevoir ladite quantité spécifique de palettes, ledit dispositif de distribution étant déplaçable dans ladite direction transversale pour distribuer ladite quantité spécifique dans une rainure spécifique le long de ladite direction transversale.

10. Système selon la revendication 8, dans lequel ledit système comprend en outre une station de rejet pour la réception desdites palettes à partir dudit dispositif de distribution au cas où ledit poids spécifique n'est pas obtenu.

11. Système selon l'une quelconque revendications précédentes, dans lequel ladite cinquième station fournit une soudure large entre chacune desdites rainures, ou alternativement deux soudures plus minces entre chacune desdites rainures.

12. Système selon l'une quelconque des revendications précédentes comprenant en outre une septième station pour au moins partiellement séparer lesdites première et deuxième feuilles dans ladite direction transversale.

13. Procédé de génération de bandes de palettes de tabac conditionnées sous vide, lesdites palettes étant fournies en vrac, le procédé comprenant les étapes consistant en:
L'alimentation d'une première feuille d'une première matière polymérique, ladite première feuille définissant une direction longitudinale et une direction transversale,
l'étirage profond de ladite première feuille pour la génération de rainures individuelles dans ladite première feuille, lesdites rainures étant localisées l'une à côté de l'autre dans lesdites directions longitudinales et transversales,
le pesage et la distribution d'une quantité spécifique de palettes dans chacune desdites rainures de ladite première feuille en combinant une première et une deuxième quantité de palettes, ladite première quantité étant plus large que ladite deuxième quantité,
l'alimentation d'une deuxième feuille d'une deuxième matière polymérique, ladite deuxième matière polymérique étant soudable avec ladite première matière polymérique, ladite deuxième feuille s'étendant dans lesdites directions longitudinale et transversale et couvrant lesdites rainures de ladite première feuille,
l'application de vide dans lesdites rainures et la soudure de ladite première et ladite deuxième feuille ensemble le long des soudures encerclait chacune desdites rainures de manière circonférentielle, et
le coupage desdites feuilles entre lesdites rainures dans la direction longitudinale pour générer des bandes de palettes de tabac conditionnées sous vide, ledit procédé étant effectué dans une chambre climatisés qui maintient une température n'excédant pas 15°C, de préférence n'excédant pas 10°C.

14. Système selon l'une quelconque des revendications précédentes, dans lequel ladite première quantité est pesée avant ladite deuxième quantité.

15. Système selon l'une quelconque des revendications 13 ou 14, comprenant en outre l'une quelconque des particularités des revendications 1 à 12.
